# EUROPÄISCHE PATENTSCHRIFT

(11) **EP 1 611 542 B1**
(45) Veröffentlichungstag und Bekanntmachung des Hinweises auf die Patenterteilung: **09.05.2007**
(21) Anmeldenummer: 03729826.2
(22) Anmeldetag: 10.04.2003
(51) Int. Cl.: G06K 9/00

(54) **SYSTEM ZUR BERÜHRUNGSLOSEN ABBILDUNG VON HAUTLEISTEN MIT HOHEM KONTRAST**
SYSTEM FOR HIGH CONTRAST CONTACTLESS REPRESENTATION OF STRIPS OF THE SKIN
SYSTEME PERMETTANT LA REPRESENTATION SANS CONTACT DE PAPILLES DERMIQUES AVEC UN CONTRASTE ELEVE

(30) Priorität: 08.04.2003 DE 10315923
(43) Veröffentlichungstag der Anmeldung: 04.01.2006
(73) Patentinhaber: TBS Holding AG, 88088 Pfäffikon SZ (CH)
(72) Erfinder: MERBACH, Peter-Michael, 98544 Zelle-Mehlis (DE); HAUKE, Rudolf, 89168 Niederstotzingen (DE); NOTHAFT, Hans-Peter, 89233 Neu-Ulm (DE)
(74) Vertreter: Liedtke, Klaus
(86) Internationale Anmeldenummer: PCT/DE2003/001174
(87) Internationale Veröffentlichungsnummer: WO 2004/093000

(56) Entgegenhaltungen:
- DE-A- 10 103 622
- US-A- 4 553 837
- US-A- 4 933 976
- US-A1- 2002 190 190
- CHUN-JEN TSAI ET AL: "Model-based synthetic view generation from a monocular video sequence" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26. Oktober 1997 (1997-10-26), Seiten 444-447, XP010254203 ISBN: 0-8186-8183-7
- LEVOY M ET AL: "THE DIGITAL MICHELANGELO PROJECT: 3D SCANNING OF LARGE STATUES" COMPUTER GRAPHICS. SIGGRAPH 2000 CONFERENCE PROCEEDINGS. NEW ORLEANS, LA, JULY 23 - 28, 2000, COMPUTER GRAPHICS PROCEEDINGS. SIGGRAPH, NEW YORK, NY: ACM, US, 23. Juli 2000 (2000-07-23), Seiten 131-144, XP001003549 ISBN: 1-58113-208-5

## Beschreibung

Die Erfindung betrifft ein Verfahren und eine Anordnung zur Ermittlung biometrische Daten an Fingern, mit einer Lichtquelle zur Beleuchtung der unebenen Oberfläche, einem abbildenden optischen System und einer Auswerteeinrichtung zur elektronischen Bildverarbeitung, wobei die Oberfläche ohne berührenden Kontakt zu optisch wirksamen Flächen abgetastet wird und Teilbilder zu einem Gesamtbild zusammengesetzt werden

Die Erfassung biometrischer Daten ist für viele Anwendungsfälle erforderlich. Insbesondere zur Personenidentifikation und zur Berechtigungskontrolle für den Zugang zu gesicherten Bereichen ist die genaue und möglichst fälschungssichere Erfassung dieser Daten erforderlich. Wegen ihrer vielfältigen Vorteile werden dabei häufig berührungslose Verfahren verwendet. Hierzu ist im Stand der Technik eine Reihe von Möglichkeiten beschrieben.

Nach EP 0 194 783 B 1 ist ein Gerät zur Detektion von Daten unebener Oberflächen bekannt, bei dem eine transparente Platte zwei gegenüberliegende Oberflächen aufweist, wobei eine zu detektierende unebene Oberfläche mit Vertiefungen und Vorsprüngen gegen eine der ebenen Oberflächen der Platte gedrückt wird, mit einer Lichtquelle zum Beleuchten der unebenen Oberfläche am Kontaktabschnitt durch die transparente Platte hindurch und einem optischen Element zum Führen des Lichtes, welches von der unebenen Oberfläche gestreut wird, zum Lichtdetektor.
Die Lichtquelle ist so angeordnet, dass sie den Kontaktabschnitt unter einem Beleuchtungswinkel beleuchtet, welcher kleiner ist als ein kritischer Winkel, damit das auf den Kontaktabschnitt von der Lichtquelle einfallende Licht nicht total reflektiert wird, wodurch ein Teil des Lichtes, welcher an den Vorsprüngen der unebenen Oberfläche gestreut wird, eine innere Totalreflexion zumindest einmal an der zweiten Oberfläche der Platte durchmacht, damit er sich in eine Richtung gegen das optische Element fortpflanzt, wogegen der Grund der Existenz eine Lücke zwischen den Vertiefungen und dem Kontaktabschnitt Licht, welches an den Vertiefungen gestreut wird, keine solche innere Totalreflexion durchmacht, wodurch die zwei Arten von gestreutem Licht räumlich getrennt sind, wobei das optische Element angeordnet ist, um nur an den Vorsprüngen gestreutes Licht zum Detektor zu führen.

Ferner ist in EP 0 359 554 B 1 eine Anordnung zur Bestimmung von Fingerabdrücken beschrieben, mit der Zonen des Fingers auf einen Lichtempfänger abgebildet werden. Die Anordnung verfügt über eine Lichtquelle, Mittel zum Führen der von der Lichtquelle auf die Oberfläche des zu detektierenden Fingers verlaufenden Lichtstrahlen, einem optischen Abbildungssystem, welches von einem bestrahlten Teil der Probe ein Bild erzeugt, einer Lichtdetektoreinrichtung zum Detektieren des Bildes und einer Einrichtung zur Ausgabe eines Detektionssignals. Mit der Anordnung soll bestimmt werden, ob die Probe ein biologisches Objekt oder eine Nachbildung ist. Hierzu ist der Lichtdetektor mit einer Lichtempfängerfläche versehen, die in Zonen geteilt ist, so dass ein Bild des bestrahlten Teils auf der Lichtempfängerfläche erzeugt wird. Der Lichtdetektor verfügt über getrennte optische Ausgänge für die jeweils von einer Vielzahl von Zonen empfangenen Lichtstrahlen. Die Unterscheidung, ob es sich um ein authentisches Objekt, also einen lebenden Finger, oder um ein Nachbildung handelt, erfolgt durch Auswertung des Lichtverlaufes, wobei die Erscheinung ausgenutzt wird , dass bei einem authentischen Finger das Licht teilweise in diesen eintritt und in einer Nachbildung das Licht nicht eintritt, so dass sich unterschiedliche Lichtverläufe ergeben.

Weiter ist nach EP 1 073 988 B 1 ein System zur Hand- und Fingerlinien-Erkennung bekannt, das zur Identifizierung von Personen dient. Mit diesem System werden unter Verzicht auf mechanische Bewegungen der Anordnung durch Verwendung einer Lichtquelle, eines Polarisationsfilters und einer Kamera Hand- und/oder Fingerlinien, Muster von Papillarleisten, Muster der Unterhaut oder dergleichen optisch zur Aufnahme eines Bildes erfasst. Die optische Erfassung erfolgt mittels im Beleuchtungsstrahlengang sowie im Abbildungsstrahlengang angeordneter Polarisationsfilters und einer starr angeordneten Kamera.

Nach DE 101 03 622 A1 ist eine Vorrichtung zur Erfassung von Fingerabdrücken bekannt, bei der eine optische Abbildung eines einem abgerollten Fingerabdruck vergleichbaren Abbildung des Papillarleistenmusters eines Fingers erzeugt wird. Die Vorrichtung enthält eine Beleuchtungseinrichtung, einen Bildempfänger sowie ein Objektiv, mit dem vom Finger reflektierende Lichtstrahlen auf den Bildempfänger gelenkt werden. Das Objektiv enthält eine plan-konvexe Zylinderlinse mit parallel zum Finger liegender Zylinderachse, deren Planseite dem Finger zugewandt ist. Zur Abbildung wird polarisiertes Licht verwendet.

Ferner ist in US-A-4553837 eine Vorrichtung beschrieben, bei der der Finger in einer Rinne aufgelegt wird, um die herum die Beleuchtungseinrichtung und der Bildempfänger mittels eines Motors um eine mit der Fingerachse zusammenfallende Drehachse geführt wird. Dabei werden verschiedene Sätze von Informationssignalen aufgenommen und diese zu einem Abbild zusammengefügt, welches einem abgerollten Fingerabdruck entspricht.

In US-A-4933976 ist ein Verfahren zum Erzeugen charakteristischer Fingerdaten angegeben, mit dem ein Fingerabdruck in Echtzeit erzeugt wird. Hierbei werden verschiedene Teilbilder eines kontinuierlich abgebildeten Fingers erfasst und zu einem Gesamtbild zusammengefasst.

Bei den bekannten Anordnungen ist nachteilig, dass der Kontrast für die Abbildung der Strukturen nur gering ist, so dass eine sichere Auswertung der Bilder sehr erschwert ist.

Der Erfindung liegt die Aufgabe zugrunde, ein Verfahren und eine Vorrichtung der eingangs genannten Art anzugeben, die ein berührungsloses Abtasten eines von Hautleisten gebildeten Reliefs und das Erzeugen eines originalgetreuen Abbilds dieses Reliefs mit hohem Kontrast ermöglichen.

Erfindungsgemäß wird die Aufgabe mit einem Verfahren, welches die in Anspruch 1 angegebenen Merkmale und mit einer Vorrichtung, welche die in Anspruch 9 angegebenen Merkmale enthält, gelöst.

Vorteilhafte Ausgestaltungen sind in den zugehörigen Unteransprüchen angegeben.

Die Erfindung dient bevorzugt der optischen Abtastung von Hautleisten. Die Hautleisten sind erhaben und bilden ein charakteristisches Relief. Sie zeichnen sich durch einen höheren Glanz als die ihnen benachbarten Zwischenräume aus. Durch die glänzende Oberfläche wird das Licht zu einem großen Teil gerichtet reflektiert, wobei die Einfärbung des reflektierten Lichtes gering ist. Dagegen reflektieren die Zwischenräume diffus mit roter Einfärbung.
Da glänzende Oberflächen gerichtet reflektieren, das Licht also nach dem Reflexionsgesetz zurück gestrahlt wird, bedeutet das, dass sich Lichtquellen in der reflektierenden Fläche spiegeln. Die Hautleisten spiegeln deshalb das von einer Lichtquelle ausgehende Licht. Um eine originalgetreue und kontrastreiche Abbildung der Leisten zu erreichen, muss aber gewährleistet sein, dass nur eine Oberkante der Leiste abgebildet wird. Da sich die Neigung der Fingerleisten entlang des Fingers um bis ca. 50° ändert, wird zur Beleuchtung der äußeren - mehr geneigten - Leisten die Lichtquelle anders platziert werden als die für die Beleuchtung der Objektmitte vorgesehene Lichtquelle.
Zweckmäßigerweise steht die Kamera senkrecht zum Objekt, so dass die zur Beleuchtung dienende Lichtquelle direkt neben der Kamera stehen sollte. Die so platzierte Lichtquelle beleuchtet jedoch die äußeren Leisten nicht mehr an ihrer Oberkante, sondern seitlich davon. Dies bewirkt in der Abbildung eine scheinbare Deformation der Leisten. Zur Beleuchtung der Randbereiche des Objektes werden deshalb die Lichtquellen weiter außen angeordnet.

Eine vorteilhafte Ausgestaltung der Erfindung nutzt die Farbe des Lichtes, mit der das Objekt beleuchtet wird, um den Kontrast der Abbildung zu erhöhen.
Wird das Objekt mit weißem Licht gerichtet beleuchtet, erscheinen die Fingerlinien weiß glänzend, die Zwischenräume aber diffus rot. Durch Farbfilterung bei der Aufnahme und/oder durch farbige Beleuchtung lässt sich der Kontrast steigern.

Bei dem erfindungsgemäßen Verfahren wird ein zu detektierendes Objekt so beleuchtet, dass in jedem Objektbereich die Oberkante der Hautleisten reflektiert.

Zur Identifikation eines Fingers erfolgt die Beleuchtung so, dass die Flächennormale in jedem Fingerbereich die Winkelhalbierende des Winkels zwischen Beleuchtung und Kameraobjektiv mit der Fingerachse als Scheitelpunkt bildet. Dabei soll jedoch die Lichtquelle nicht ausgedehnt sein, sondern quer zur Fingerachse eine Ausdehnung von 15 mm nicht überschreiten.

Das Verfahren kann mit verschiedenen Anordnungen realisiert werden. Insbesondere sind Ausführungen geeignet, die folgende Funktionen ausführen:
- Bewegen der Beleuchtung auf einer um das Objekt angeordneten Bahn,
- Bewegen der Kamera auf einer um das Objekt angeordneten Bahn,
- Anordnung mehrerer Kameras um das Objekt herum,
- Anordnung mehrerer schaltbarer Beleuchtungen,
- Anordnung mehrerer verschiedenfarbiger Beleuchtungen und mehrerer farbselektiver Kameras,
- Anordnung mehrere verschiedenfarbige Beleuchtungen und einer Farbkamera in einer Anordnung, wobei die oben genannte Winkelbedingung erfüllt ist.

Die Zwischenräume zwischen den einzelnen Hautleisten sind zwar nicht glänzend, aber auch nicht dunkel. Sie erscheinen in der Abbildung rot gefärbt. Im roten Licht ist aber die Struktur des Objektes kaum erkennbar. Der Kontrast der Abbildung kann weiter erhöht werden, wenn im roten bzw. infraroten Spektralbereich ein zu den Aufnahmen der Hautleisten deckungsgleiches Bild erzeugt und dieses als einheitlicher Dunkelwert vom Strukturbild subtrahiert wird.

Mit der erfindungsgemäßen Anordnung wird durch die beschriebene Anordnung von Kamera und Lichtquelle ein möglichst großer Teil des Objektes so beleuchtet, dass sich die Lichtquelle immer genau in der Oberkante der Hautleiste spiegelt. Nur dann ergibt sich ein originalgetreues Bild der Leisten.

Würde die Beleuchtung mit einer hinreichend große Lichtquelle erfolgen, wäre zwar überall gewährleistet, dass die Oberkante der Leisten irgend einen Teil der Lichtquelle spiegeln. Allerdings leuchten dann auch die Seitenflächen, da ja die restlichen, für andere Bereiche zuständige Lichtquellenteile diese ausleuchten. Die Hautleisten erscheinen in diesem Fall breit, der Kontrast zwischen ihnen kann ganz verloren gehen und die Leisten werden am Rand deformiert abgebildet.

Es ist möglich, die Lichtquelle so gestalten, dass nur Lichtstrahlen emittiert werden, die sich in einer Achse des Objektes treffen. Dies kann z. B. mit parallelem Licht, welches mittels einer Zylinderlinse fokussiert wird, erreicht werden. Allerdings erfordert dies einen gewissen Aufwand. Ferner muss das Objekt exakt mittig platziert werden.

Um zu verhindern, dass störendes Licht auf die Seitenflächen fällt, kann die Lichtquelle bewegt werden oder die Lichtquellen werden nacheinander eingeschaltet. Dann wird für jede Stellung ein separates Bild aufgenommen.

Eine vorteilhafte Ausführung sieht vor, dass mehrere Kameras angeordnet werden aus deren einzelnen Bildern ein Gesamtbild zusammengesetzt wird, das nur die exakt beleuchteten Bildteile verwendet. Die dabei auftretende Schwierigkeit, dass wegen der unvermeidlichen Unterschiede der einzelnen Perspektiven die Schnittstellen nicht exakt passen, kann mit einer geeigneten Software gelöst werden.

Es ist deshalb vorteilhaft, mit nur einer Kamera für jede Lichtquelle ein separates Bild zu erzeugen und die jeweils exakten Bereiche der Einzelbilder zu einem Gesamtbild aneinander zu reihen. Dabei wird ein großer Teil der Bilder nicht benötigt.
Das gelingt beispielsweise mit einer CMOS-Kamera, bei der jedes beliebige Pixel gezielt einzeln ausgelesen werden kann. Man kann dann für jede Beleuchtung nacheinander den Bereich der Matrix auslesen, der gut beleuchtet ist, da bekannt ist, wo für jede Lichtquelle dieser Bereich liegen muss. Die Bilderzeugung ist damit viel schneller als das Erzeugen eines Gesamtbildes durch Zusammenfügen möglich. Praktisch kann das genau so schnell gehen, als würde ein Gesamtbild aufgenommen. Es wird nur während der Bildaufnahme die Beleuchtung synchron weitergeschaltet.

Eine weitere Ausführungsmöglichkeit verwendet farbige Lichtquellen, so dass die Trennung über die einzelnen Farbauszüge erfolgt. Es wird hier also nach der Bildaufnahme aus jedem Farbauszug der Bereich herausgenommen, der optimal beleuchtet ist und in einem Bildspeicher als Schwarz-Weiß-Bild ein Gesamtbild erzeugt. Vorteilhaft ist hier, dass der Vorgang simultan erfolgt. Als nachteilig sind der Softwareaufwand und die geringere Auflösung der Farbkamera anzusehen.

Eine besonders vorteilhafte Ausführung zur Erkennung von Fingern stellt eine Anordnung dar, bei der ein Durchschalten der Beleuchtung erfolgt und eine CMOS-Kamera synchron und selektiv ausgelesen wird. Vorteilhaft wird die Kamera so angeordnet bzw. der Auslesevorgang so gestaltet, dass stets Bereiche parallel zur Fingerachse gleichzeitig ausgelesen werden. Die Lichtquelle ist zweckmäßigerweise auch langgestreckt parallel dazu angeordnet. Der Finger wird also synchron selektiv zeilenweise gescannt, wobei die Zeilen parallel zur Fingerachse ausgerichtet sind.

Die Erfindung wird im Folgenden anhand eines Ausführungsbeispieles näher erläutert. Das Beispiel betrifft die Erkennung der Struktur von Fingerleisten.

In der zugehörigen Zeichnung zeigen
- Figur 1: eine schematische Darstellung einer Anordnung mit einer Kamera und mehreren um den Finger angeordneten Beleuchtungen,
- Figur 2: eine Anordnung mit zusätzlich angebrachten rot leuchtenden Referenzdioden
und
- Figur 3: eine Ausführung mit mehreren Kameras.

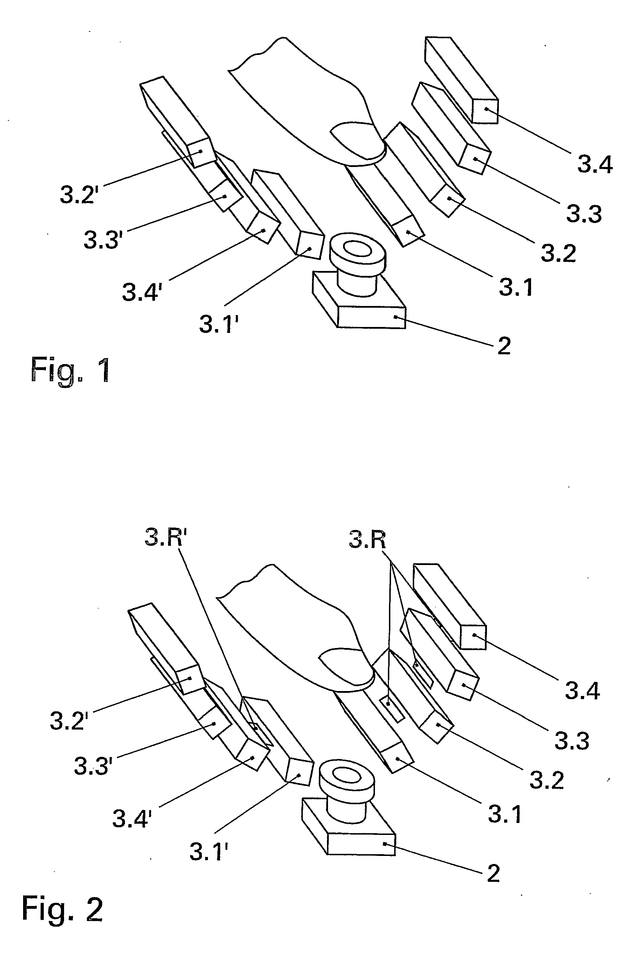

Bei der in **Figur 1** dargestellte Anordnung wird der abzutastende Finger 1 mit einer aus acht LED-Reihen 3 bestehenden Lichtquelle beleuchtet und mit einer zentral angeordneten Kamera 2 abgebildet.
Die LED-Reihen 3.1 bis 3.4 und 3.1' bis 3.4' sind in einer etwa kreisförmigen Bahn um den Finger 1 angeordnet, wobei jeweils nebeneinanderliegende LED-Reihen stets verschiedene Farben aufweisen. Die Farben wiederholen sich in einem Abstand, in dem keine gegenseitige Beeinflussung mehr stattfindet. Im vorliegenden Beispiel werden LED-Reihen vier verschiedener Farben 3.1 bis 3.4 bzw. 3.1' bis 3.4' verwendet. Die Kamera 2 ist mit einer Einrichtung versehen, die für jede Farbe ein getrenntes Bild erzeugt.
Es ist auch möglich, dass die Lichtquellen in einem Leuchtdiodenarray angeordnet sind.

In **Figur 2** ist eine vorteilhafte Ausführungsform dargestellt, bei der zwischen den LED-Reihen 3.1 bis 3.4 bzw. 3.1' bis 3.4' jeweils zwischen benachbarten Reihen eine zusätzliche LED-Reihe 3.R angeordnet ist, die rotes Licht emittieren. Damit kann in der Kamera 2 ein fünftes Farbauszugbild erzeugt werden, das nur eine sehr schwache Struktur aufweist und als Helligkeitsreferenz für das rechnerische Zusammenfügen der einzelnen Farbauszüge zu einem Gesamtbild dient. Mit der Kamera 1 wird für jede Lichtquelle ein separates Bild erzeugt und die Einzelbilder zu einem Gesamtbild aneinander gereiht. Dieses Zusammenfügen wird mit einer hier nicht dargestellten elektronischen Bildverarbeitungseinheit vorgenommen. Als Kamera 1 wird vorzugsweise eine CMOS-Kamera verwendet, bei der die Pixel gezielt ausgelesen und weiterverarbeitet werden können. Für jede LED-Reihe 3 wird nacheinander der Bereich der Matrix ausgelesen, der der betreffenden Kante zugeordnet ist. Während der Bildaufnahme wird die Beleuchtung synchron weitergeschaltet.

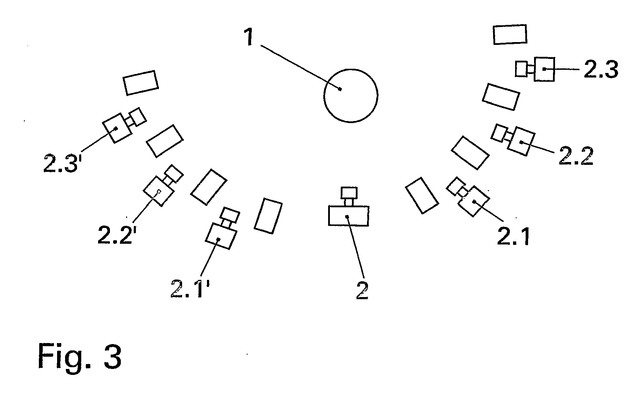

**Figur 3** zeigt eine Ausführungsform bei der mehrere Kameras 2 verwendet werden. Bei dieser Variante wird aus den von allen Kameras 2 gewonnenen Einzelbildern mit Hilfe der elektronischen Bildverarbeitungseinheit ein Gesamtbild zusammengesetzt, das nur die exakt beleuchteten Bildteile verwendet.
Dabei können Beleuchtung und/oder Empfänger auch mit Strahlenteilern zusammengeführt werden.

### BEZUGSZEICHENLISTE

- 1: Finger
- 2: Kamera
- 3: LED
- 3.1: LED der Farbe 1
- 3.2: LED der Farbe 2
- 3.3: LED der Farbe 3
- 3.4: LED der Farbe

## Patentansprüche

1. Verfahren zur Ermittlung biometrische Daten an Fingern, mit einer Lichtquelle zur Beleuchtung der unebenen Oberfläche, einem abbildenden optischen System und einer Auswerteeinrichtung zur elektronischen Bildverarbeitung, wobei die Oberfläche ohne berührenden Kontakt zu optisch wirksamen Flächen abgetastet wird und Teilbilder zu einem Gesamtbild zusammengesetzt werden, **dadurch gekennzeichnet, dass** die Oberfläche sie streifenförmig beleuchtet wird, indem mehrere Lichtquellen bogenförmig um das Objekt angeordnet sind, die nacheinander eingeschaltet werden und für jede Stellung ein separates Bild aufgenommen wird und dass mit an diskreten Stellen reflektiertem Licht Teilbilder des Objektes erzeugt werden, die selektiv ausgewertet und danach zu dem Gesamtbild zusammengesetzt und ausgewertet werden.

2. Verfahren nach Anspruch 1, **dadurch gekennzeichnet, dass** das Objekt mit mehreren Kameras (2) aufgenommen wird und aus den Einzelbildern ein Gesamtbild zusammengesetzt wird, wobei für das Gesamtbild nur ausgewählte beleuchteten Bildteile der Einzelbilder verwendet werden.

3. Verfahren nach Anspruch 1, **dadurch gekennzeichnet, dass** mit nur einer Kamera (2) für jede Lichtquelle ein separates Bild erzeugt wird und jeweils ausgewählte Bereiche der Einzelbilder zu einem Gesamtbild zusammengefügt werden.

4. Verfahren nach einem der vorhergehenden Ansprüche, **dadurch gekennzeichnet, dass** das von den streifenförmig beleuchteten Bereichen reflektierte Licht mit unterschiedlicher Wellenlänge ausgewertet und zu einer Gesamtaussage zusammengesetzt wird.

5. Verfahren nach Anspruch 4, **dadurch gekennzeichnet, dass** die Oberfläche mit weißem Licht gerichtet beleuchtet wird und mit einer Kamera (2) ein Bild der Oberfläche erfasst wird, wobei durch Farbfilterung einzelner Bereiche bei der Aufnahme eine Bilderreihe von Bildern unterschiedlicher Wellenlängen erzeugt wird, wobei nach der Bildaufnahme aus jedem Farbauszug der Bereich ausgewählt wird, der einer gewünschten Objektstelle zugeordnet ist und aus den einzelnen Farbauszügen in einem Bildspeicher als Schwarz-Weiß-Bild ein Gesamtbild erzeugt wird.

6. Verfahren nach Anspruch 4, **dadurch gekennzeichnet, dass** die streifenförmig beleuchteten Bereiche der Oberfläche mit Licht unterschiedlicher Wellenlängen beleuchtet werden und die Einzelbildern der Bereiche zu einem Gesamtbild zusammengefügt werden.

7. Verfahren nach einem der Ansprüche 4 bis 6, **dadurch gekennzeichnet, dass** nur eine Kamera (2) verwendet wird, die für jede Lichtquelle ein separates Bild erzeugt, wobei während der Bildaufnahme die Beleuchtung synchron weitergeschaltet werden, so dass nur ausgewählte Bereiche weiterverarbeitet werden und mittels elektronischer Steuereinheit für jede Beleuchtung nacheinander ein ausgewählter Bereich der Matrix auslesen wird.

8. Verfahren nach einem der vorhergehenden Ansprüche, **dadurch gekennzeichnet, dass** zur Detektion des Fingers (1) dieser zeilenweise selektiv gescannt wird, wobei die Zeilen parallel zur Fingerachse ausgerichtet sind.

9. Anordnung zur berührungslosen biometrischen Fingerprüfung, mit einer Lichtquelle zum Beleuchten der unebenen Oberfläche, einem abbildenden optischen System und einer Auswerteeinrichtung zur elektronischen Bildverarbeitung, wobei senkrecht zu der zu detektierenden Oberfläche eine elektronische Kamera (2) angeordnet ist und sich beidseitig daneben in einer Reihe linienförmige Lichtquellen befinden und die elektronische Kamera (2) mit einer elektronischer Steuereinheit gekoppelt ist, die Teilbilder der einzelnen Lichtquellen gewünschten Objektstelle zuordnet und zu einem Gesamtbild verarbeitet, **dadurch gekennzeichnet, dass** eine Kamera (2) verwendet wird, die für jede Lichtquelle ein separates Bild erzeugt, wobei während der Bildaufnahme die Lichtquellen sequenziell weitergeschaltet werden und nur ausgewählte Bereiche des Bildes weiterverarbeitet werden und mittels elektronischer Steuereinheit für jede Beleuchtung nacheinander ein Bereich der Matrix ausgelesen wird, der der gewünschten Objektstelle zugeordnet ist.

10. Anordnung nach Anspruch 9, **dadurch gekennzeichnet, dass** mehrere Kameras (2) nebeneinander in einer Reihe angeordnet sind.

11. Anordnung nach einem der Ansprüche 9 oder 10, **dadurch gekennzeichnet, dass** sich senkrecht zur Mitte der zu detektierenden Oberfläche eine weiße Lichtquelle befindet und daneben in einer Reihe mehrere Kameras (2) angeordnet sind, die spektral gefilterte Bilder aufnehmen.

12. Anordnung nach einem der Ansprüche 9 bis 11, **dadurch gekennzeichnet dass** zwischen Lichtquellen, die die gleiche Wellenlänge aussenden, mindestens eine Lichtquelle angeordnet ist, die mit einer davon verschiedenen Wellenlänge strahlt.

## Claims

1. Method for acquiring biometrical data from fingers using a light source for illuminating the uneven surface, with an imaging optical system and a processing unit for electronic image processing whereby the surface is scanned without touching optically effective areas and partial images are merged to form an over-all image, **characterized in that** the surface is illuminated in a strip-shaped manner by arcuately arranging multiple light sources around the object, whereby the light sources are consecutively switched on and one separate image is acquired for each position, whereby partial images of the object are created using light reflected at discrete points and whereby the partial images are processed selectively, subsequently merged to form the over-all image and processed.

2. Method according to claim 1, **characterized in that** the object is captured by multiple cameras (2) and that an over-all image is merged from the individual images, whereby only selected illuminated image parts of the individual images are used for the over-all image.

3. Method according to claim 1, **characterized in that** one separate image for each light source is created by only one camera (2) and that respectively selected sectors of the individual images are merged to form an over-all image.

4. Method according to one of the preceding claims, **characterized in that** the light reflected by the areas illuminated in a strip-shaped manner is analyzed using different wavelengths and is composed to an overall statement.

5. Method according to claim 4, **characterized in that** the surface is directionally illuminated with white light and an image of the surface is acquired by a camera (2), wherein an image series of images of different wavelengths is created by color filtering single areas during the taking, wherein, after taking an image, from each color excerpt the area is selected to which a desired location on the object is assigned and an over-all image is created in a frame buffer in the form of a black and white image from the single color excerpts.

6. Method according to claim 4, **characterized in that** the areas illuminated in a strip-shaped manner are illuminated using light of different wavelengths and that the individual images of the sectors are merged to form an over-all image.

7. Method according to one of the claims 4 to 6, **characterized in that** only one camera (2) is used which creates a separate image for each light source, wherein the illumination are switched subsequently and synchronously while capturing the images so that only selected sectors are processed further and that, by means of an electronic control unit, a selected sector of the matrix is read out for each lighting situation.

8. Method according to one of the preceding claims, **characterized in that**, for detecting a finger (1), the finger is scanned line by line selectively, wherein the lines are aligned parallelly to the finger's axis.

9. Arrangement for a touchless biometrical finger detection, comprising a light source for illuminating the uneven surface, an imaging optical system and a processing unit for electronic image processing, wherein perpendicularly to the surface to be detected, an electronic camera (2) is arranged and that, bilaterally beneath it, line-shaped light sources are arranged in a row and that the electronic camera (2) is coupled to an electronic control unit which assigns partial images of the individual light sources to desired locations on the object and processes the partial images to an overall image, **characterized in that** a camera (2) is used which creates a separate image for each light source, wherein the light sources are consecutively switched on and only selected sectors of the image are processed further and, by means of an electronic control unit, for each lighting situation a sector of the matrix is read out successively which is assigned to the desired location on the object .

10. Arrangement according to claim 9, **characterized in that** multiple cameras (2) are arranged side by side in a row.

11. Arrangement according to one of the claims 9 or 10, **characterized in that** a white light source is arranged perpendicularly to the center of the surface to be detected and, alongside, multiple cameras (2) are arranged in a row, which capture spectrally filtered images.

12. Arrangement according to one of the claims 9 to 11, **characterized in that** between light sources emitting the same wavelength at least one light source is arranged which radiates at a different wavelength.

## Revendications

1. Procédé de détermination de données biométriques sur des doigts, avec une source lumineuse pour l'éclairage de la surface non plane, un système d'imagerie optique et un dispositif d'analyse pour le traitement électronique de l'image, la surface étant balayée sans contact avec des surfaces optiquement efficaces et des images partielles étant assemblées pour former une image générale, **caractérisé en ce que** la surface est éclairée par bandes, par disposition de plusieurs sources lumineuses successivement activées en arc autour de l'objet, **en ce qu'**une image séparée est saisie pour chaque position, et **en ce que** des images partielles sont générées avec la lumière réfléchie sur des points discrets, lesquelles sont analysées sélectivement avant d'être assemblées pour former et analyser l'image générale.

2. Procédé selon la revendication 1, **caractérisé en ce que** l'objet est saisi par plusieurs caméras (2) et une image générale formée à partir des images particulières, des fragments éclairés sélectionnés des images particulières étant exclusivement exploités pour former l'image générale.

3. Procédé selon la revendication 1, **caractérisé en ce qu'**une image séparée est générée avec une seule caméra (2) pour chaque source lumineuse, des zones sélectionnées des images particulières étant assemblées pour former une image générale.

4. Procédé selon l'une des revendications précédentes, **caractérisé en ce que** la lumière réfléchie avec des longueurs d'onde différenciées par les zones éclairées par bandes est analysée et assemblée pour former une information générale.

5. Procédé selon la revendication 4, **caractérisé en ce que** la surface est éclairée avec de la lumière blanche orientée et une image de la surface saisie par une caméra (2), un filtrage chromatique de différentes zones permettant de générer une série d'images de longueurs d'ondes différenciées lors de la saisie, la zone associée à un point d'objet souhaité étant sélectionnée dans chaque extrait chromatique après saisie d'image, et une image générale étant générée comme image en noir et blanc à partir des différents extraits chromatiques dans une mémoire d'images.

6. Procédé selon la revendication 4, **caractérisé en ce que** les zones de la surface éclairées par bandes sont éclairées par une lumière de longueurs d'ondes différenciées, et les images particulières des zones assemblées pour former une image générale.

7. Procédé selon l'une des revendications 4 à 6, **caractérisé en ce qu'**une seule caméra (2) est utilisée, laquelle génère une image séparée pour chaque source lumineuse, l'éclairage étant avancé de manière synchrone pendant la saisie d'image, si bien que seules des zones sélectionnées seront traitées, et une zone sélectionnée de la matrice affichée par une unité de commande électronique pour chaque éclairage successif.

8. Procédé selon l'une des revendications précédentes, **caractérisé en ce que**, pour la détection du doigt (1), celui-ci est scanné sélectivement par lignes, lesdites lignes étant parallèles à l'axe du doigt.

9. Dispositif pour l'examen biométrique sans contact des doigts, avec une source lumineuse pour l'éclairage de la surface non plane, un système d'imagerie optique et un dispositif d'analyse pour le traitement électronique de l'image, une caméra électronique (2) étant disposée perpendiculairement à la surface à détecter, et des sources lumineuses alignées en rangée étant prévues de part et d'autre de ladite caméra, la caméra électronique (2) étant couplée à une unité de commande électronique, laquelle attribue à un point d'objet souhaité les images partielles des différentes sources lumineuses et traite celles-ci pour former une image générale, **caractérisé en ce qu'**une caméra (2) est utilisée, laquelle génère une image séparée pour chaque source lumineuse, les sources lumineuses étant séquentiellement avancées pendant la saisie d'image, et seules des zones sélectionnées de l'image étant traitées, une zone sélectionnée de la matrice attribuée au point d'objet souhaité étant affichée par une unité de commande électronique pour chaque éclairage successif.

10. Dispositif selon la revendication 9, **caractérisé en ce que** plusieurs caméras (2) sont alignées sur une rangée.

11. Dispositif selon l'une des revendications 9 ou 10, **caractérisé en ce qu'**une source de lumière blanche est disposée perpendiculairement au centre de la surface à détecter, plusieurs caméras (2) étant alignées sur une rangée à côté de celle-ci, lesquelles saisissent des images avec un filtrage spectral.

12. Dispositif selon l'une des revendications 9 à 11, **caractérisé en ce qu'**entre des sources lumineuses émettant avec la même longueur d'onde est disposée au moins une source lumineuse émettant avec une longueur d'onde différenciée.
